**Europäisches Patentamt**

**European Patent Office**

**Office européen des brevets**

(11) Publication number: **0 003 961**
**B1**

# (12) EUROPEAN PATENT SPECIFICATION

(45) Date of publication of patent specification: **29.08.84**

(21) Application number: **79100285.0**

(22) Date of filing: **31.01.79**

(51) Int. Cl.³: **C 08 G 63/26**

(54) **Process for preparing high molecular weight catalyst free polyethylene terephthalate.**

(30) Priority: **13.02.78 US 877455**

(43) Date of publication of application:
**19.09.79 Bulletin 79/19**

(45) Publication of the grant of the patent:
**29.08.84 Bulletin 84/35**

(84) Designated Contracting States:
**DE FR GB IT**

(56) References cited:
**FR-A-1 368 576**
**FR-A-1 561 316**
**FR-A-1 564 495**
**FR-A-2 061 624**

(73) Proprietor: **THE GOODYEAR TIRE & RUBBER COMPANY**
**1144 East Market Street**
**Akron, Ohio 44316 (US)**

(72) Inventor: **Kelley, Mellis Michael**
**972 Jason Avenue**
**Akron Ohio 44314 (US)**

(74) Representative: **Weyland, Joseph Jean Pierre**
**Goodyear International Tire Technical Center**
**Patent Department Avenue Gordon Smith**
**L-7750 Colmar-Berg (LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for manufacturing a high molecular weight polyethylene terephthalate polyester polymer.

Heretofore it has been the practice to try to improve the stability of polyester resins by adding chemical stabilizers to such resins. In addition, materials are added which cap free carboxyl groups or otherwise reduce the amount of free carboxyl groups in the resin.

Now it is known that the presence of foreign materials affects resin stability and that catalysts that are effective in promoting esterification or transesterification and condensation and molecular weight build up also cause degradation reactions after polymer is made and put under stress such as exposure to heat or hydrolytic conditions. Some attempts have been made to eliminate these after effects of catalysts by adding materials that may form complexes with the catalyst residues and deactivate them.

French Patent Specification No. 1 368 576 discloses a process for preparing high molecular weight polyethylene terephthalate by the direct esterification of terephthalic acid and ethylene glycol in a medium of ethylene glycol esters of terephthalic acid followed by polycondensation of the ester mixture obtained. However, this patent further discloses the use of a polycondensation catalyst to effect the polymerization of the ester mixture.

In the prior art it has also been suggested that in the preparation of polyester by esterification to form bis hydroxyethyl terephthalate or oligomers which are subsequently polymerized to form high molecular weight polymer the esterification can be run without a catalyst (US patents 3 050 533 and 3 427 287). However, is was believed a condensation catalyst such as antimony trioxide or titanium glycolate had to be used to provide for polymerization to form high molecular weight polyester. It has been unexpectedly found that a high molecular weight polyester entirely free of catalyst can be made at commercially feasible rates when in sequence

(a) when the free carboxyl content of said initially prepared polymer is less than 25 equivalents per $10^6$ grams of polymer the polymer is cooled; is then

(b) ground or otherwise reduced to a particle size of United States Standard Sieve 20 mesh or less; and then

(c) subjected to, in the total absence of any polymerization catalyst, a fluid bed or static solid state polymerization.

The polycondensation of low molecular weight prepolymers in the solid phase, i.e. a "powder build-up process", is in itself known as evidenced by French Patent Specifications No. 1 564 495 and 1 561 316. However, while the disclosures presented in these specifications are specifically directed to either means for making such solid phase processes more efficient by use of mechanical agitation means in addition to the use of fluidizing gases or means for preparing a more friable prepolymer for use in such process, both disclose the addition of polycondensation catalysts to the prepolymers to attain an acceptable reaction activity.

A mode of carrying out the invention will now be described.

Low polymer is prepared in a metal reactor capable of being operated at pressures above atmospheric. This reactor is equipped with agitation, facilities for heating and a condenser for distillation of by-products. 7.85 kg (17.3 lbs) of ethylene glycol and 9.44 kg (20.8 lbs) of terephthalic acid were added to the reactor. The reactor was pressurized with nitrogen to 240 kPa (35 psi) and this pressure was maintained throughout the preparation of the low polymer. Agitation was started and heat applied to the reactor. The progress of the reaction was followed by monitoring the temperature of the reaction mixture and the temperature of the head of the condenser. Initiation of esterification is noted by a sharp increase in temperature of the head of the condenser and the collection of water distilled of as a by-product. As esterification progresses an increase in the temperature of the reaction mixture is also noted. Completion of the reaction forming the low polymer is indicated by a drop in the condenser head temperature and is accompanied by the temperature of the reaction mixture reaching approximately 270°C. Time for this reaction is approximately 3-1/2 hours. After completion of this step the low molecular weight polymer had an intrinsic viscosity of 0.100 and a carboxyl value of 403 equivalents per $10^6$ grams polymer.

One hundred grams of the above product was placed in a glass tube reactor with 5 milliliters of ethylene glycol. A test tube containing toluene was inserted in the top of the glass tube reactor to act as a cold finger to prevent loss of glycol when the mixture is heated. Nitrogen gas was slowly passed through the mixture in the glass tube reactor. The temperature was raised to 260°C and maintained at this point for one hour. Then the cold finger was removed from the tube reactor. The temperature was raised to 280°C and the pressure gradually reduced over a period of one hour to 0.05 millimeter of mercury pressure for about 15 minutes, when the mixture became very viscous. Any excess glycol is removed during this step. The pressure was brought to atmospheric pressure and the low polymer was removed from the reactor. It was cooled and ground to pass a 40 mesh screen. The low polymer had an intrinsic viscosity of 0.193 and a carboxyl group concentration of 11 equivalents per $10^6$ grams of polymer.

A 50 gram sample of the ground low polymer was placed in a fluid bed polymerization apparatus. Preheated nitrogen gas was passed through the polymer at the rate of 0.14 m³ (5 cubic feet) per hour at 240° for 1-1/2 hours; 245°C for 1-1/2 hours and then at 250° for 3-1/2 hours. The polymer obtained had an intrinsic viscosity of 0.942 (as determined in a 60/40 phenol/tetrachloroethane mixed solvent at 30.0°C) and a free carboxyl group concentration of 0 equivalents per $10^6$ grams of polymer.

In the above example the resin was ground to pass a 40 mesh screen before it was subjected to solid state polymerization. Somewhat larger particles can be used. The particles will generally be in the range of from 20 mesh to 40 mesh (U.S. Standard) size.

## Claim

A process for the manufacture of high molecular weight polyethylene terephthalate wherein there is initially prepared a catalyst free low molecular weight polyethylene terephthalate polyester having an intrinsic viscosity of from 0.1 to 0.4 (as determined in a 60/40 phenol/tetrachloroethane mixed solvent at 30.0°C) by reacting ethylene glycol with said catalyst free low molecular weight polyester derived from the same said glycol and terephthalic acid characterized in that in sequence

(a) when the free carboxyl content of said initially prepared polymer is less than 25 equivalents per $10^6$ grams of polymer the polymer is cooled; is then

(b) ground of otherwise reduced to a particle size of United States Standard Sieve 20 mesh or less; and then

(c) subjected to, in the total absence of any polymerization catalyst, a fluid bed or static solid state polymerization

to provide high molecular weight polyethylene terephthalate entirely free of any catalyst.

## Patentanspruch

Verfahren zur Herstellung eines Polyethylenterephthalats mit hohem Molekulargewicht, bei welchem anfänglich ein katalysatorfreier Polyethylenterephthalatpolyester mit niederem Molekulargewicht mit einer Intrinsikviskosität von 0,1 bis 0,4 (bestimmt in einem gemischten Lösungsmittel aus Phenol/Tetrachlorethan (60/40) bei 30°C) durch Umsetzung von Ethylenglycol mit dem katalysatorfreien Polyester mit niederem Molekulargewicht, der auf das gleiche Glycol und die gleiche Terephthalsäure zurückgeht, hergestellt wird, dadurch gekennzeichnet, daß infolge

(a) dann, wenn der freie Carboxylgehalt des anfänglich hergestellten Polymeren weniger als 25 Äquivalente pro $10^6$ g des Polymeren beträgt, das Polymere abgekühlt wird, anschließend

(b) das Polymere auf eine Teilchengröße von 20 Maschen (20 mesh) oder weniger gemäß der US—Standard Siebreihe vermahlen oder anderweitig in seiner Größe herabgesetzt wird und anschließend

(c) bei völliger Abwesenheit irgend eines Polymerisationskatalysators einer Polymerisation in festem Zustand in einem Fließbett oder einem statischen Bett

zur Gewinnung eines Polyethylenterephthalats mit hohem Molekulargewicht, das völlig frei von jedem Katalysator ist, unterzogen wird.

## Revendication

Procédé de fabrication de téréphtalate de polyéthylène de poids moléculaire élevé, procédé dans lequel un prépare initialement un polyester de téréphtalate de polyéthylène de faible poids moléculaire, exempt de catalyseur et ayant une viscosité intrinsèque de 0,1 à 0,4 (déterminée dans un solvant mixte 60:40 de phénol et de tétrachloréthane à 30°C) en faisant réagir l'éthylène-glycol avec ce polyester de faible poids moléculaire exempt de catalyseur dérivant de ce glycol et de cet acide téréphtalique, caractérisé en ce que, dans l'ordre:

(a) lorsque la teneur en groupes carboxy libres de ce polymère initialement préparé est inférieure à 25 équivalents par $10^6$ grammes du polymère, on refroidit le polymère; puis

(b) on le broie ou un le réduit d'une autre manière en particules d'une granularité de 20 mailles ou moins selon les normes des Etats-Unis d'Amérique; et ensuite

(c) en absence totale de tout catalyseur de polymérisation, on effectue une polymérisation à lit fluide ou à l'état solide statique,

pour obtenir un téréphtalate de polyéthylène de poids moléculaire élevé totalement exempt de catalyseur.